# FASCICULE DE BREVET EUROPEEN

(11) **EP 0 467 295 B1**
(45) Date de publication et mention de la délivrance du brevet: **22.06.1994**
(21) Numéro de dépôt: 91111854.5
(22) Date de dépôt: 16.07.1991
(51) Int. Cl.: F16B 21/08

(54) **Dispositif permettant un assemblage démontable**
Vorrichtung für einen zerlegbaren Zusammenbau
Device permitting dismountable assembly

(30) Priorité: 16.07.1990 FR 9009047
(43) Date de publication de la demande: 22.01.1992
(73) Titulaire: ALCATEL RADIOTELEPHONE, 75008 Paris (FR)
(72) Inventeur: Jadoul, Claude, F-94120 Fontenay Sous Bois (FR); Agostini, Eric, F-92250 La Garenne Colombes (FR)
(74) Mandataire: Weinmiller, Jürgen

(56) Documents cités:
- US-A- 3 019 501

## Description

La présente invention concerne un dispositif permettant un assemblage démontable d'une pièce sur une autre grâce à des raccords solidaires de ces pièces. Elle est particulièrement appropriée au cas où l'on désire un assemblage rapide, réversible et surtout avec un positionnement précis et sans jeu. (US-A 3 019 501)

Les dispositifs d'assemblage démontable sont nombreux et très variés dans les types de liaisons qu'ils impliquent. Lorsque l'on désire que le montage et le démontage se fassent rapidement, certains types de liaisons sont à écarter d'office : les liaisons vis-écrou par exemple. On leur préfère souvent des liaisons obtenues par emboîtement de raccords, le montage provoquant, par déformation, l'insertion d'un élément d'accrochage solidaire de l'un des raccords dans un réceptacle solidaire de l'autre raccord. C'est le cas par exemple de certaines liaisons entre tubes d'aspirateur où le raccordement est obtenu par insertion d'un ergot rétractable solidaire de l'extrémité d'un tube dans au trou récepteur pratiqué à l'extrémité de l'autre tube. Ces liaisons assurent effectivement un montage et un démontage rapide. Leurs défauts résident dans le manque de précision dans le positionnement et dans les jeux résiduels. Si ces défauts ne sont pas gênants dans les liaisons entre tubes d'aspirateur, ils peuvent être très perturbants pour d'autres appareils.

Dans certains appareils, il est très souhaitable que certains éléments constituants puissent être assemblés par un système d'assemblage démontable, rapide et sans jeu conduisant à un véritable verrouillage de ces éléments. C'est le cas par exemple du montage d'une batterie d'accumulateurs dans un radiotéléphone portable. En effet, une batterie d'accumulateurs représente une partie importante du poids d'un tel radiotéléphone. Celui-ci étant portable, il est destiné à subir de nombreux mouvements qui peuvent être répétitifs. Si la batterie n'est pas correctement maintenue dans son support il en résulte une nuisance pour l'utilisateur (à cause du bruit d'entrechoquement par exemple) et pour l'appareil (dégradations dues aux chocs répétés, interruption de l'alimentation le cas échéant). Il faut cependant que le montage et le démontage de la batterie puissent être réalisés de manière rapide, ce qui exclut une liaison du type vis-écrou.

C'est pour résoudre ce genre de problème que l'invention a été conçue. Elle consiste à utiliser un élément déformable (ou plusieurs éléments déformables tels des languettes ) ayant un profil bien défini et que l'on engage dans un réceptacle. Après déformation, cet élément déformable vient se placer avec précision dans un logement approprié. Tout déplacement de cet élément est ensuite interdit par la présence d'une pièce coulissante qui le maintient par pression afin d'annuler les jeux résiduels. Pour l'utilisateur, cela se traduit par un geste élémentaire pour le verrouillage et par un geste simple pour le déverrouillage.

L'invention a donc pour objet un dispositif permettant un assemblage démontable d'une première pièce sur une deuxième pièce comprenant un premier raccord et un deuxième raccord solidaires respectivement de la première pièce et de la deuxième pièce, l'assemblage étant obtenu par emboîtement des raccords selon un axe dit axe d'emboîtement, l'emboîtement provoquant, par déformation, l'insertion d'un élément de retenue appartenant au premier raccord dans un élément de réception appartenant au deuxième raccord,
caractérisé en ce que :
- le premier raccord est équipé de moyens de rappel tendant à l'écarter du deuxième raccord,
- le deuxième raccord comprend des moyens élastiques exerçant une pression sur l'élément de retenue quand celui-ci est inséré dans l'élément de réception pour l'y maintenir, ces moyens élastiques étant équipés d'un dispositif de rappel pour les écarter de l'élément de retenue lors du démontage,
- l'élément de retenue et l'élément de réception ont des formes complémentaires.

Il est avantageux que les raccords comportent une partie tubulaire, l'assemblage étant réalisé par emboîtement des parties tubulaires.

L'invention sera mieux comprise, et d'autres avantages apparaîtront, à la lecture de la description qui va suivre, donnée à titre non limitatif, accompagnée des dessins annexés parmi lesquels :
- les figures 1 à 3 représentent, vu en coupe, un dispositif selon l'invention en cours de verrouillage,
- la figure 4 représente, vu en coupe, le même dispositif en position verrouillée,
- les figure 5 et 6 représent, vu en coupe, le même dispositif en cours de déverrouillage,
- la figure 7 représente, vu en coupe, un détail du dispositif selon l'invention.

Selon l'invention, l'assemblage des pièces à réunir se fait grâce à des raccords, chaque pièce possédant son raccord. Ces raccords, qui sont complémentaires, sont solidement fixés aux pièces, par exemple par une liaison vis-écrou, par soudure, par collage. Ils peuvent aussi faire partie intégrante des pièces.

L'élément de retenue et son élément de réception peuvent avoir des formes variables mais ils doivent être complémentaires. L'essentiel est que, lorsque l'élément de retenue est en position verrouillage dans l'élément de réception tout mouvement relatif de l'un par rapport à l'autre soit rendu impossible par les moyens élastiques de pression qui exercent leur action sur l'élément de retenue. Cette action peut s'exercer de manière directe ou indirecte. Ces moyens élastiques comprendront avantageusement un ressort.

Les moyens de rappel tendant à écarter les raccords l'un de l'autre peuvent être constitués d'un ou de plusieurs ressorts ou de tout autre moyen connu de l'homme de l'art.

Les raccords peuvent prendre différentes formes. Leur adaptabilité constitue un avantage supplémentaire. Cependant, une forme tubulaire comportant plusieurs éléments de retenue les rend particulièrement efficaces parce qu'on peut répartir de façon symétrique les pressions exercées sur les éléments de retenue.

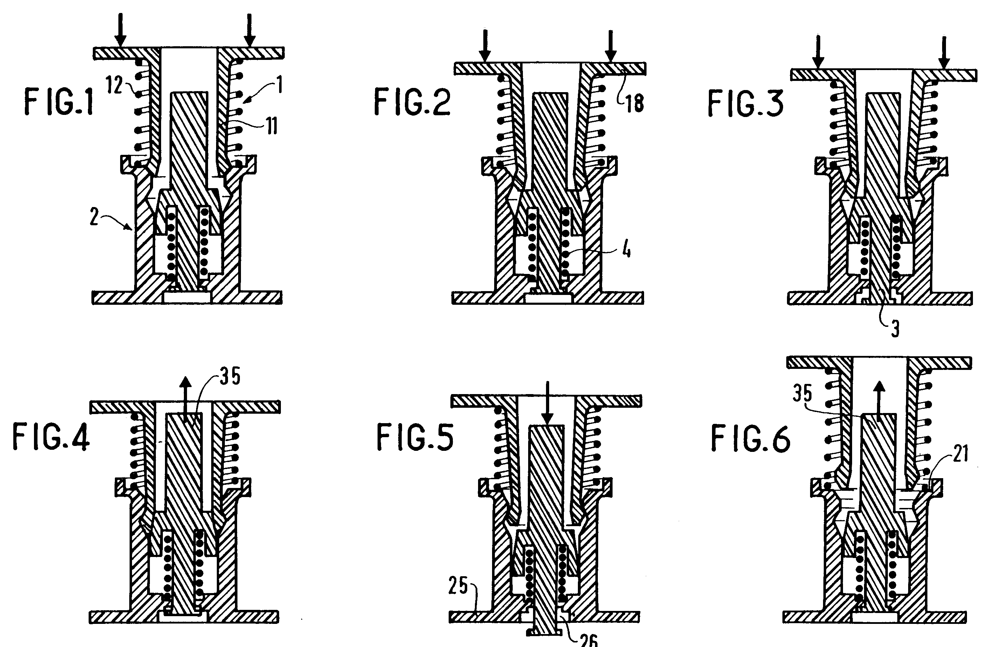

Les figures 1 à 6 représentent des raccords selon l'invention présentant cette forme tubulaire avantageuse, la partie tubulaire étant fendue axialement pour délimiter des languettes par exemple au nombre de quatre.

Dans le cas d'un radiotéléphone portable, le raccord comportant des languettes peut être solidaire de la batterie d'accumulateurs, l'autre raccord étant alors solidaire du châssis du radiotéléphone.

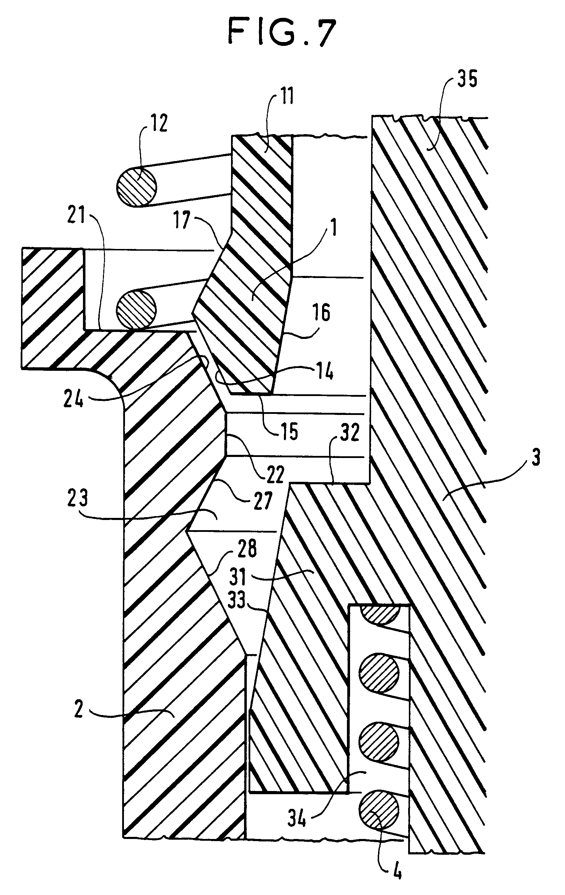

Les figures 1 à 6 représentent le dispositif d'assemblage démontable selon l'invention dans différentes positions de verrouillage ou de déverrouillage. Ce dispositif comprend un premier raccord 1 solidaire d'une première pièce non représentée et un deuxième raccord 2 solidaire d'une deuxième pièce également non représentée. Ces raccords ont une forme générale tubulaire. Ils sont représentés en coupe axiale. Le raccord 1, fendu axialement, comprend par exemple quatre languettes telles que les deux languettes 11. Un ressort cylindrique 12 est situé autour de la partie tubulaire du raccord 1. Sa course est limitée d'un côté par la base 18 du raccord 1 auquel il peut être fixé pour éviter qu'il ne se dégage de sa position lorsque les raccords 1 et 2 sont séparés. Lors du verrouillage, le ressort 12 prend appui par son autre côté sur un épaulement 21 (voir la figure 7) de la face d'entrée du raccord 2. Le ressort exerce alors une action qui tend à écarter les deux raccords l'un de l'autre.

Les languettes comportent des éléments de retenue 13 de formes complémentaires aux éléments de réception 23 usinés dans le raccord 2 (Figure 7).

Comme le montre la figure 1, l'assemblage est réalisé par emboîtement des parties tubulaires des raccords selon leurs faces d'entrée. Ces faces d'entrée sont biseautées selon le même angle par rapport à l'axe d'emboîtement. Les faces biseautées constituent entre elles des surfaces de glissement de manière à provoquer une déformation de l'un des raccords ou des deux lors de l'emboîtement. Dans l'exemple représenté par les figures 1 à 7, la face d'entrée du raccord 1 est effilée extérieurement pour constituer une face de glissement 14. La face d'entrée du raccord 2 est évasée intérieurement pour constituer une autre face de glissement 24.

L'élément de retenue 13 est formé d'un bourrelet de profil triangulaire, présent sur chaque languette, l'une des arêtes de ce profil étant constituée par la face de glissement 14. L'élément de réception 23 consiste en une rainure de section triangulaire formée dans la périphérie interne du raccorde 2. Entre la face de glissement 24 et l'élément de réception ou rainure 23, on peut trouver une surface de transition 22.

A l'intérieur du raccord 2, se trouve un élément coulissant cylindrique ou boisseau 3 comprenant un épaulement 31 à partir duquel sont formées une face de poussée 32 et une face de pression 33. A la face de poussée 32 du boisseau 3 correspond la face de poussée 15 du raccord 1, cette face de poussée 15 étant avantageusement située à l'extrémité des languettes 11. A la face de pression 33 correspondent les faces 16 du premier raccord formées par évasement intérieur.

Du côté opposé à la face de poussée 32, un évidemment 34 est pratiqué dans l'épaulement 31. Il a une forme en couronne dont l'axe est confondu avec l'axe du boisseau 3. Il permet la réception de l'extrémité d'un ressort cylindrique 4.

Du côté raccord 1, l'élément coulissant 3 se prolonge par une tige 35 dont l'usage apparaîtra plus loin.

Le fond 25 du raccord 2 est percé d'un trou 26 dans lequel passe une extrémité du boisseau 3. Le trou 26 est usiné de façon que l'extrémité du boisseau puisse y coulisser mais que le ressort 4 soit retenu à l'intérieur du raccord 2.

Les raccords 1 et 2 ainsi que le boisseau 3 peuvent être réalisés en matière plastique.

Le verrouillage du dispositif se fait de la manière suivante. Lorsqu'on présente les languettes dans l'axe du raccord 2 et que l'on exerce une pression progressive comme il est indiqué sur la figure 1, les languettes se déforment vers l'intérieur par le glissement des faces 14 sur la face 24. Les faces de poussée 15 viennent en contact avec la face de poussée 32 du boisseau que le ressort 4 oppose à l'introduction du raccord 1. La descente des languettes s'accompagne de la descente du boisseau par compression du ressort 4.

Après une plage de transition donnée par la surface 22, la surface 27 de l'élément de réception 23 permet aux languettes de revenir à leur état de repos, ce qui libère le boisseau 3 qui remonte sous l'effet du ressort 4 jusqu'à annulation des jeux entre la face de pression 33 et la face 16, entre la face 17 (formant une seconde arête du profil triangulaire de l'élément de retenue 13) et la surface 27, entre la face de glissement 14 et la surface 28 de l'élément de réception 23. Les languettes se trouvent donc mises en place très précisément et maintenues sans aucun jeu. Le ressort 12, qui a été compressé dès le début de la descente des languettes, reste donc en pression lorsque l'ensemble est verrouillé.

Pour déverrouiller le dispositif, il suffit d'appliquer sur la partie supérieure de la tige 35 une pression suffisante pour compresser le ressort 4. Ainsi le boisseau relâche la pression appliqué sur les languettes. Celles-ci, sous l'effet de la pression du ressort 12 et des faces 17 et 27, se déforment à nouveau et permettent au raccord 1 de remonter. L'utilisateur peut alors relâcher la pression qu'il exerce sur la tige 35 et de ce fait, le boisseau remonte à son tour. Le dispositif se retrouve ainsi déverrouillé.

D'autres configurations peuvent être données à ce dispositif d'assemblage démontable sans sortir du cadre de l'invention. Ainsi, les languettes du premier raccord peuvent venir se placer à l'extérieur du deuxième raccord.

Le dispositif de rappel du boisseau peut être situé à l'opposé de la tige décrite plus haut et dans ce cas on tirerait sur le boisseau pour déverrouiller.

## Revendications

1. Dispositif permettant un assemblage démontable d'une première pièce sur une deuxième pièce comprenant un premier raccord (1) et à un deuxième raccord (2) solidaires respectivement de la première pièce et de la deuxième pièce, l'assemblage étant obtenu par emboîtement des raccords selon un axe dit axe d'emboîtement, l'emboîtement provoquant, par déformation, l'insertion d'un élément de retenue appartenant au premier raccord dans un élément de réception appartenant au deuxième raccord, caractérisé en ce que :
- le premier raccord (1) est équipé de moyens de rappel (12) tendant à l'écarter du deuxième raccord,
- le deuxième raccord (2) comprend des moyens élastiques exerçant une pression sur l'élément de retenue (13) quand celui-ci est inséré dans l'élément de réception (23) pour l'y maintenir, ces moyens élastiques étant équipés d'un dispositif de rappel pour les écarter de l'élément de retenue lors du démontage,
- l'élément de retenue et l'élément de réception ont des formes complémentaires.

2. Dispositif selon la revendication 1, caractérisé en ce que chaque raccord comporte une partie tubulaire terminée par une face d'entrée, l'assemblage étant réalisé par emboîtement des parties tubulaires selon leurs faces d'entrée.

3. Dispositif selon la revendication 2, caractérisé en ce que les faces d'entrée sont biseautées selon le même angle par rapport à l'axe d'emboîtement, l'une étant évasée et l'autre effilée, les faces biseautées constituant entre elles des surfaces de glissement de manière à provoquer ladite déformation lors de l'emboîtement.

4. Dispositif selon la revendication 3, caractérisé en ce que la face d'entrée du premier raccord est effilée extérieurement pour constituer une face de glissement (14), la face d'entrée du deuxième raccord étant évasée intérieurement pour constituer aussi une face de glissement (24), l'élément de retenue (13) consistant en un bourrelet de profil triangulaire situé sur la périphérie extérieure du premier raccord, ce profil triangulaire comportant une arête constituée par la face de glissement (14) du premier raccord, l'élément de réception (23) consistant en une rainure triangulaire réalisée à la périphérie intérieure du deuxième raccord.

5. Dispositif selon l'une quelconque des revendications 2 à 4, caractérisé en ce que les moyens élastiques sont disposés à l'intérieur du deuxième raccord et consistent en un élément coulissant selon l'axe d'emboîtement et équipé d'un ressort (4) qui le pousse vers la face d'entrée du deuxième raccord, l'élément coulissant (3) comportant une face de poussée (32) et une face de pression (33), le premier raccord comprenant également une face de poussée (15) formant une surface de poussée commune avec la face de poussée de l'élément coulissant lors de l'assemblage, la face d'entrée du premier raccord étant évasée intérieurement (16) pour former une surface de pression commune avec la face de pression de l'élément coulissant qui possède un profil correspondant.

6. Dispositif selon la revendication 5, caractérisé en ce que le dispositif de rappel des moyens élastiques est constitué par une tige (35) solidaire de l'élément coulissant (3).

7. Dispositif selon l'une quelconque des revendications 2 à 6, caractérisé en ce que la partie tubulaire du premier raccord (1) est fendue axialement à partir de la face d'entrée correspondante pour constituer des languettes (11) possédant chacune un élément de retenue (13).

## Patentansprüche

1. Vorrichtung, die eine lösbare Verbindung eines ersten Bauteils mit einem zweiten Bauteil erlaubt, mit einem ersten Kopplungsorgan (1) und einem zweiten Kopplungsorgan (2), die mit dem ersten bzw. dem zweiten Bauteil fest verbunden sind, wobei der Zusammenbau durch Ineinanderstecken der Kopplungsorgane gemäß einer Ineinanderfügungsachse erhalten wird, wobei das Ineinanderstecken durch Verformung das Einführen eines zum ersten Kopplungsorgan gehörenden Rückhalteelements in ein zum zweiten Kopplungsorgan gehörendes Aufnahmeelement bewirkt, dadurch gekennzeichnet, daß
- das erste Kopplungsorgan (1) mit Rückholmitteln (12) versehen ist, die es vom zweiten Kopplungsorgan zu entfernen suchen,
- das zweite Kopplungsorgan (2) elastische Mittel aufweist, die einen Druck auf das Rückhalteelement (13) ausüben, wenn dieses in das Aufnahmeelement (23) eingeführt ist, um es darin festzuhalten, wobei diese elastischen Mittel mit einer Rückholvorrichtung ausgestattet sind, um sie während des Zerlegens vom Rückhalteelement zu entfernen,
- das Rückhalteelement und das Aufnahmeelement komplementäre Formen haben.

2. Vorrichtung nach Anspruch 1, dadurch gekennzeichnet, daß jedes Kopplungsorgan einen rohrförmigen Bereich aufweist, der in einer Eingangsfläche endet, wobei der Zusammenbau durch Ineinanderfügen der rohrförmigen Bereiche gemäß ihren Eingangsflächen geschieht.

3. Vorrichtung nach Anspruch 2, dadurch gekennzeichnet, daß die Eingangsflächen gemäß dem gleichen Winkel in Bezug auf die Ineinanderfügungsachse abgeschrägt sind, wobei die eine sich ausweitet und die andere sich verjüngt und wobei die abgeschrägten Flächen untereinander Gleitflächen bilden, um die Verformung während des Ineinanderfügens zu bewirken.

4. Vorrichtung nach Anspruch 3, dadurch gekennzeichnet, daß die Eingangsfläche des ersten Kopplungsorgans außen verjüngt ist, um eine Gleitfläche (14) zu bilden, während die Eingangsfläche des zweiten Kopplungsorgans innen ausgeweitet ist, um ebenfalls eine Gleitfläche (24) zu bilden, wobei das Rückhalteelement (13) aus einem Wulst mit Dreieck-Profil besteht, der sich auf dem Außenumfang des ersten Kopplungsorgans befindet, daß dieses Dreieck-Profil eine Kante aufweist, die von der Gleitfläche (14) des ersten Kopplungsorgans gebildet wird, und daß das Aufnahmeelement (23) aus einer dreieckigen Nut besteht, die am Innenumfang des zweiten Kopplungsorgans ausgebildet ist.

5. Vorrichtung gemäß einem beliebigen der Ansprüche 2 bis 4, dadurch gekennzeichnet, daß die elastischen Mittel innerhalb des zweiten Kopplungsorgans angeordnet sind und aus einem Element bestehen, das entlang der Ineinanderfügungsachse gleitet und mit einer Feder (4) versehen ist, die es zur Eingangsfläche des zweiten Kopplungsorgans drückt, wobei das gleitende Element (3) eine Schubfläche (32) und eine Druckfläche (33) aufweist, daß das erste Kopplungsorgan ebenfalls eine Schubfläche (15) aufweist, die während des Zusammenbaus mit der Schubfläche des gleitenden Elements eine gemeinsam Schubfläche bildet, und daß die Eingangsfläche des ersten Kopplungsorgans innen ausgeweitet (16) ist, um eine gemeinsame Druckfläche mit der Druckfläche des gleitenden Elements zu bilden, das ein entsprechendes Profil aufweist.

6. Vorrichtung nach Anspruch 5, dadurch gekennzeichnet, daß die Rückholvorrichtung der elastischen Mittel aus einer Stange (35) besteht, die fest mit dem gleitenden Element (3) verbunden ist.

7. Vorrichtung nach einem beliebigen der Ansprüche 2 bis 6, dadurch gekennzeichnet, daß der rohrförmige Bereich des ersten Kopplungsorgans (1) ausgehend von der entsprechenden Eingangsfläche axial geschlitzt ist, um Zungen (11) zu bilden, die je ein Rückhalteelement (13) aufweisen.

## Claims

1. A device for enabling a first part to be detachably assembled to a second part, the device comprising a first fastener (1) and a second fastener (2) fixed respectively to the first part and to the second part, assembly being obtained by engaging the fasteners along an "engagement" axis, with engagement causing a retaining component of the first fastener to be inserted by deformation into a reception component of the second fastener, the device being characterized in that:
the first fastener (1) is fitted with return means (12) tending to move it away from the second fastener;
the second fastener (2) includes resilient means exerting pressure on the retaining component (13) when inserted in the reception component (23) to keep it therein, said resilient means being fitted with a return device to move them away from the retaining component during detachment; and
the retaining component and the reception component are complementary in shape.

2. A device according to claim 1, characterized in that each fastener comprises a tubular portion terminated by an inlet face, assembly being achieved by interfitting the tubular portions via their inlet faces.

3. A device according to claim 2, characterized in that the inlet faces are chamfered at the same angle relative to the engagement axis, one of them being flared and the other of them tapering, the chamfered faces mutually constituting sliding surfaces for causing said deformation during engagement.

4. A device according to claim 3, characterized in that the inlet face of the first fastening tapers on the outside to constitute a sliding face (14), the inlet face of the second fastening is flared on the inside to constitute another sliding face (24), the retaining element (13) is constituted by a lip of triangular section situated on the outside periphery of the first fastener, said triangular section including a side constituted by the sliding face (14) of the first fastener, the reception component (23) being constituted by a triangular groove formed in the inside periphery of the second fastener.

5. A device according to any one of claims 2 to 4, characterized in that the resilient means are disposed inside the second fastener and constitute a component sliding along the engagement axis and fitted with a spring (4) which urges towards the inlet face of the second fastener, the sliding component (3) including a thrust face (32) and a pressure face (33), the first fastener also including a thrust face (15) constituting a thrust surface which is common to the thrust face of the sliding component during assembly, the inlet face of the first fastener having an inside flare (16) to form a common pressure surface with the pressure face of the sliding component which possesses a corresponding profile.

6. A device according to claim 5, characterized in that the return device for the resilient means is constituted by a rod (35) fixed to the sliding component (3).

7. A device according to any one of claims 2 to 6, characterized in that the tubular portion of the first fastener (1) is axially split from the corresponding inlet face to constitute tongues (11) each possessing a retaining component (13).
